(19) Europäisches Patentamt
European Patent Office
Office européen des brevets

(11) **EP 3 900 550 A1**

(12) **EUROPEAN PATENT APPLICATION**
published in accordance with Art. 153(4) EPC

(43) Date of publication:
**27.10.2021 Bulletin 2021/43**

(21) Application number: **19856448.6**

(22) Date of filing: **19.12.2019**

(51) Int Cl.:
***A23L 25/00*** (2016.01)

(86) International application number:
**PCT/ES2019/070863**

(87) International publication number:
**WO 2020/128132 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.12.2018 ES 201831252**

(71) Applicant: **Universitat Politècnica De Catalunya 08034 Barcelona (ES)**

(72) Inventors:
• **MATTA FAKHOURI, Farayde**
**08222 Terrassa (ES)**
• **DE REDONDO REALINHO, Vera Cristina**
**08225 Terrassa (ES)**
• **DE SOUSA PAIS ANTUNES, Marcelo**
**08225 Terrassa (ES)**
• **VELASCO PERERO, José Ignacio**
**08228 Terrassa (ES)**

(74) Representative: **Manuel Illescas y Asociados, S.L.**
**C/ Príncipe de Vergara 197, Oficina 1°A**
**28002 Madrid (ES)**

(54) **BABASSU-BASED FOOD COMPOSITION**

(57)    The present invention relates to a gluten-free alimentary composition which comprises extruded babassu flour. It also relates to an alimentary ingredient and to an alimentary film which comprises said babassu flour. The present invention also relates to a procedure for preparing an extruded babassu flour-based alimentary com- position and to a procedure for preparing an alimentary film which comprises said flour. Likewise, an alimentary protective coating is also provided which comprises said alimentary composition and/or a packaging for said film and the procedures for their preparation.

EP 3 900 550 A1

**Description**

**Field of the Invention**

The present invention generally belongs to the field of nutrition. In particular, the invention relates to a babassu-based alimentary composition.

**State of the Art**

The number of people that are coeliac or gluten-intolerant is currently on the rise, such that these individuals cannot consume any food that contains gluten.

Wheat gluten is formed by glutenin and gliadin, these proteins being responsible for the plasticity and the elasticity that gluten confers in bakery products and also responsible for the intolerance and allergies to said product.

In recent years different alternatives to wheat flour have risen for producing food that may be consumed by coeliacs and, in this sense, we find chickpea flour, rice flour and quinoa flour, amongst others. However, these flours do not present the characteristic properties that gluten confers to the bakery product.

In addition, some scientific literature is known that discloses gluten-free foods. For example, the scientific article "Pão sem glúten adicionado de farinha do mesocarpo de babaçu (Orbignya phalerata)" by M. H. De Souza Couri et al. discloses a gluten-free bread to which babassu mesocarp flour has been added. In contrast with this document, in the present invention the babassu flour is extruded flour. Likewise, the flour of this document does not use babassu oil or plasticiser.

On the other hand, "Bioactive films based on babassu mesocarp flour and starch" by Maniglia, B.C. et al., discloses bioactive films manufactured with babassu flour. In contrast with this document, in the present invention the babassu flour is extruded flour. The film manufacturing process of the present invention is also different from that of this preceding document as it extrudes the flour and babassu oil mixture with a given temperature profile and forms a tubular film by means of blowing and a roller system.

In spite of these existing alternatives, the need to provide a gluten-free flour still exists, but one presenting the physico-chemical properties typical of wheat flour, such that it may be used as an alimentary ingredient suitable for coeliacs or gluten-intolerant people.

**Brief Description of the Invention**

The present invention solves the described problems in the state of the art as it provides a babassu-based alimentary composition, suitable for coeliacs, free from preservatives and additives, which may be used as an alimentary ingredient and that, owing to its physico-chemical properties, may be used for preparing alimentary films.

Thus, in a first aspect, the present invention relates to a gluten-free alimentary composition that comprises extruded babassu flour (hereinafter, composition of the present invention).

In a particular embodiment, the extruded flour of the composition of the present invention comprises babassu mesocarp flour and babassu seed oil. More in particular, the extruded babassu flour comprises babassu mesocarp flour in a percentage comprised within 80-99% by weight, and babassu seed oil in a ratio comprised within 20-1% by weight.

In a particular embodiment, the composition of the present invention comprises a plasticiser.

In the present invention plasticiser refers to a food additive which increases the plasticity of the composition that comprises it. In a more particular embodiment, the plasticiser is glycerol. In another particular embodiment, the plasticiser is sorbitol.

In another aspect, the present invention relates to an alimentary ingredient (hereinafter, alimentary ingredient of the present invention) which comprises the alimentary composition of the present invention.

In another aspect, the present invention relates to an alimentary film (hereinafter, alimentary film of the present invention) which comprises the alimentary composition of the present invention.

In another aspect, the present invention relates to an alimentary protective coating which comprises the alimentary composition of the present invention.

In another aspect, the present invention relates to an alimentary packaging which comprises the alimentary composition of the present invention.

In another aspect, the present invention relates to a procedure for preparing an alimentary composition of the present invention, which comprises the following steps:

a) mixing babassu flour from the mesocarp in a percentage comprised within 80-99% by weight and babassu seed oil in a percentage comprised within 20-1% by weight, and
b) extruding the mixture of step a).

In a particular embodiment, the extruding step b) of the procedure for preparing the alimentary composition of the present invention is carried out with a temperature profile of 80-95°C, 100-120°C, 100-120°C, 100-120°C and at 20-30 rpm.

In another aspect, the present invention relates to a procedure for obtaining the alimentary film of the present invention, which comprises the procedure for preparing the alimentary composition of the present invention and the following additional steps:

i) adding a plasticiser to the alimentary composition,
ii) extruding the mixture obtained in step i) at 25-35 rpm and with a temperature profile of 85-95°C, 115-125°C, 115-125°C and 125-135°C,
iii) forming a tubular film by means of blowing and a roller system.

In another aspect, the invention relates to a procedure for preparing an alimentary protective coating which comprises the following steps:

- adding a solvent to the alimentary composition in a concentration of 0.5-30%;
- heating the mixture, preferably up to 25-95°C, until complete dissolution;
- covering alimentary products, fruit, for example, with the solution, amongst other alimentary products;
- leaving the solvent to evaporate.

In another aspect, the invention relates to a procedure for preparing an alimentary packaging which comprises the following steps:

- heating the alimentary film of the present invention until reaching a suitable softening state;
- forming the alimentary film by pressing it against a mould;
- cutting the excess edges of the film;
- sealing the packaging.

## Description of the Figures

The foregoing and other features and advantages will be more fully understood based on the following detailed description of several merely illustrative, non-limiting embodiments in reference to the attached drawings, in which:

Fig. 1 depicts the flour of the present invention, of a dark colour, together with two, non-extruded, raw flour samples, of lighter colours.

Fig. 2A depicts the viscosity curve of the flour *in natura* and Fig. 2B depicts the viscosity curve of the flour of the present invention, the maximum viscosity peak being noticeably reduced from 2189 cP and 7.5 min for flour *in natura* to 273 cP and 5 min for the flour of the present invention.

Fig. 3 is a photograph of the tubular film produced by means of blowing with the composition of the present invention.

Figs. 4A and 4B are photographs of two alimentary products prepared with the composition of the present invention, in particular a beverage (Fig. 4A) and some biscuits (Fig. 4B).

Fig. 5 is a comparative photograph of two strawberries kept in the refrigerator at 6°C for 20 days.

The one on the left was previously treated with the alimentary protective coating of the present invention, whereas the one on the right was not.

Fig. 6 is a photograph of the obtained alimentary packaging, according to one aspect of the present invention.

## Detailed Description of the Invention and of Some Exemplary Embodiments

*Example 1: Preparation of the alimentary composition of the present invention*

In a particular embodiment, the composition of the present invention was prepared in the following manner:
In a first step, 50 g of oil of babassu seed were added to 1 kg of raw powdered flour of babassu mesocarp. The mixture was homogenised at 25 °C in a rotary mixer at 30 revolutions per minute for 20 minutes.

Next, the extrusion was carried out by taking the previous mixture to an extruder comprised of a screw rotating at 25 revolutions per minute, having a 25 mm diameter, 100 mm length, 4 heating areas with a temperature profile of 90, 115, 115 and 115°C and a head with a circular section nozzle having a 3 mm diameter. The flour thus extruded was collected and air-cooled at 20°C, to finally feed a blade mill rotating at 1200 revolutions per minute, producing a homogenous extruded flour.

Once the extruded babassu flour was obtained, it was compared with raw natural babassu flour, that is, with non-extruded flour. To that end, the following flour characteristics were analysed:

- Food safety: the extrusion process used for the preparation of the flour of the present invention meant that the extruded flour contained less humidity (%) and lower water activity (Aw) and, therefore, its shelf life was extended. Likewise, the scattering of said values in the flour of the present invention is drastically reduced compared to those of the flour *in natura* (Table 1). The humidity rate (%) was determined by drying using an air circulation heater at 105°C for 24h. As for the water activity, it was determined at 25°C by direct reading on a hygrometer calibrated with distilled water.

Table 1

| Flour | Humidity (%) | Water activity (Aw) |
|---|---|---|
| *In natura* | 19.34 ± 4.10 | 0.656 ± 0.20 |
| **Extruded** | 12.44 ± 0.33 | 0.470 ± 0.005 |

- Water solubility: as is shown in Table 2, the extruded flour has a greater water solubility (WSI) and water absorption (WAI) indexes than flour *in natura.* Said values show that the flour of the present invention is more water soluble and, therefore, the processing of bakery products is easier with said flour relative to the raw flour *in natura.* The WSI and WAI measurements were taken after standardising the particle size by initially sieving each flour sample through a 100-micrometre mesh, after which they were dispersed in distilled water under stirring and subsequent centrifugation at 3000 rpm for 15 min. The supernatant was separated and the resulting gel was weighed to calculate the WAI:

$$WAI\ (\%) = \frac{\text{weight of gel after centrifugation}}{\text{weight of sample (b.s)}} \times 100$$

To determine the WSI, the supernatant was dried at 100°C for 24h until a constant weight was reached, and it was determined by means of the following expression:

$$WAI\ (\%) = \frac{\text{weight of dry supernatant}}{\text{weight of sample (b.s)}} \times 100$$

Table 2

| Flour | WSI | WAI |
|---|---|---|
| *In natura* | 3.96 ± 0.87 | 3.39 ± 0.25 |
| **Extruded** | 9.17 ± 0.03 | 5.98 ± 0.02 |

- Consumption time: the flour of the present invention presents a greater consumption time once produced and, therefore, may be distributed and marketed with greater ease in different venues.

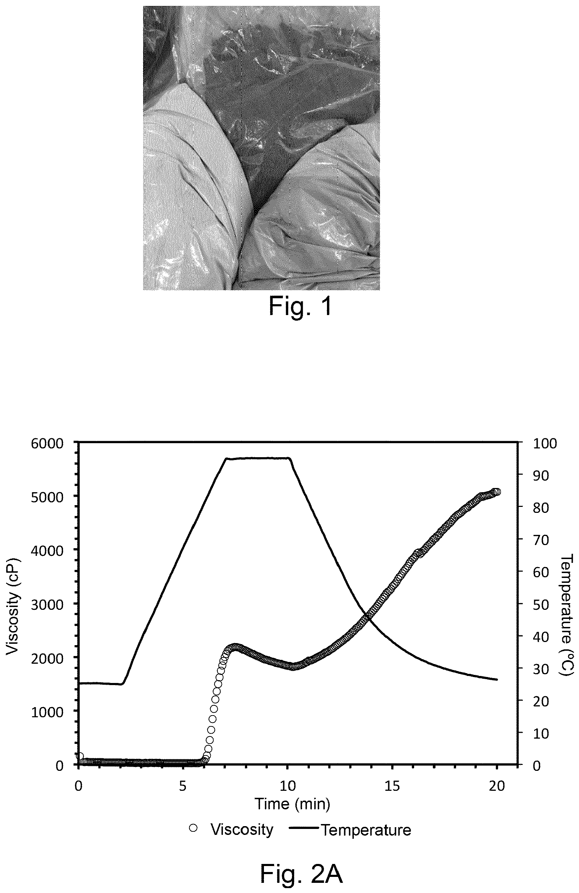

- General appearance: the flour of the present invention displays sensory changes relative to the flour *in natura*: colour change, taking on an intense brown colour (Fig. 1), as well as aroma and flavour change.

- Homogeneity: the flour of the present invention is standardised, the parameters of the process being adaptable to the securing of an extruded flour of uniform quality in the final product, which is not possible with raw flour.

- Nutritional value: the flour of the present invention has greater nutritional value than raw flour, due to its babassu oil content.

Table 3

| Flour | Protein (%) | Lipids (%) |
|---|---|---|
| *In natura* | 1.18 ± 0.1 | 0.6 5 ± 0.5 |
| **Extruded** | 1.75 ± 0.04 | 1.13 ± 0.06 |

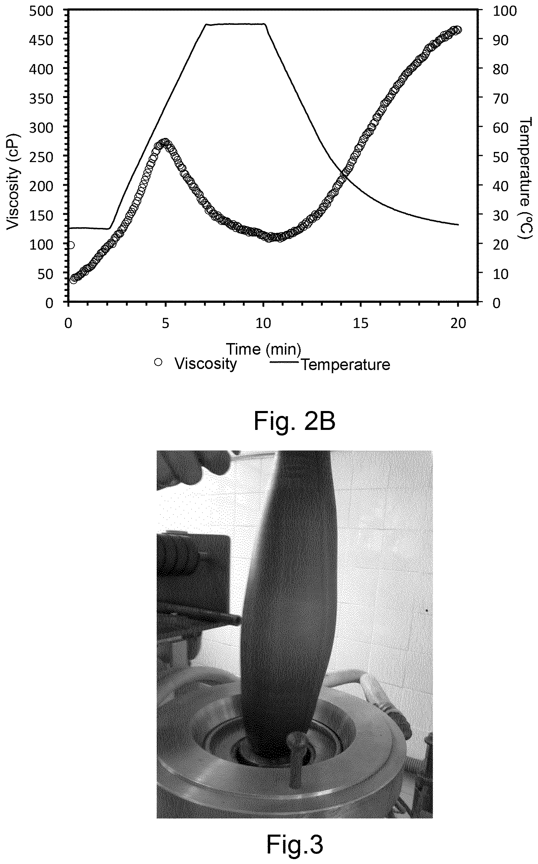

- Viscosity profile (RVA): the flour of the present invention displays a more favourable viscosity profile towards the processing of bakery products than that of flours *in natura,* with maximum viscosity values and lower times (Figs. 2a and 2b). The profiles were determined using a rapid visco analyser (RVA) on samples in an aqueous suspension, being rotated at 960 rpm in the 10-minute initial step and at 160 rpm during the rest of the experiment, applying a heating rate of 6°C/min from 25°C to 95°C, and subsequent cooling to room temperature.

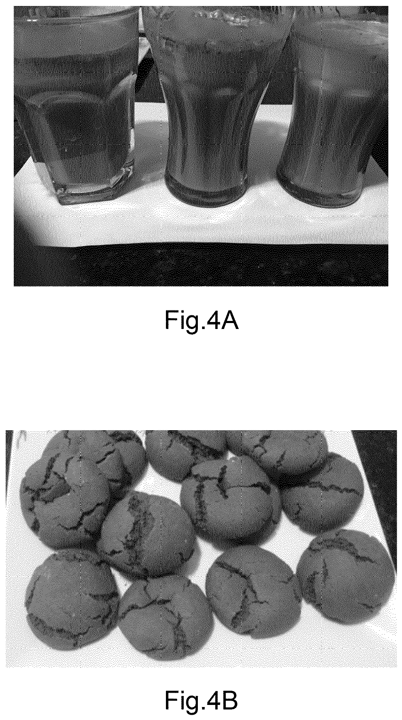

The extruded babassu flour, obtained according the described example 1 was used as an alimentary ingredient to prepare a beverage (Fig. 4a) and some biscuits (Fig. 4b).

*Example 2: Procedure for obtaining alimentary films from the composition of the invention*

In an exemplary embodiment, starting from 1 kg of extruded flour, obtained by the procedure described in example 1, 200 ml of glycerol were added for the preparation of the alimentary film. This mixture was homogenised at 25°C in a rotary mixer at 30 revolutions per minute for 20 minutes, before feeding the extruder comprised of a screw rotating at 35 revolutions per minute, having a 25 mm diameter, 100 mm length, 4 heating areas with a temperature profile of 90, 120, 120 and 130°C and a head with an annular section nozzle having a 25 mm diameter and a thickness of 1.5 mm, with an inner air-blowing system to form the tubular film, as well as an outer ring of air to cool down said film. The tubular film produced, with a diameter comprised between 150 and 300 mm, is collected in line by two 150 mm diameter nip rollers which rotate at a velocity that is selected for adjusting the thickness of the formed film, a thickness comprised between 0.05 and 0.4 mm, which is wound up by means of a system that is provided with a pneumatic drive.

The film obtained in this manner presented the following differences with respect to other films.

The majority of the edible blown films are prepared with starch. In the case of babassu, the flour can be used directly, without going through the starch extraction process.

The obtained film presented a chocolate colour without the use of colourings. It may be used for bakery products as if it were part of the product.

*Example 3: Procedure for obtaining an alimentary protective coating from the composition of the invention*

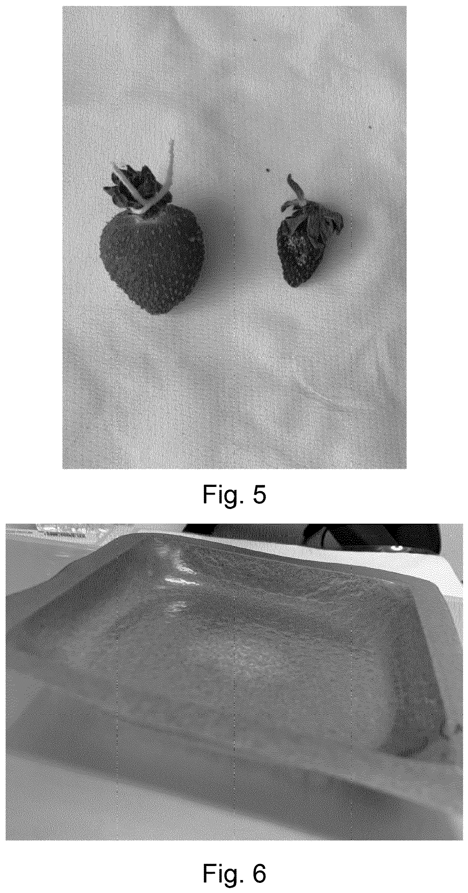

In an exemplary embodiment, 10 grams of alimentary composition obtained by the procedure described in example 1 were added to 100 ml of distilled water for the preparation of the alimentary protective coating. This mixture was heated to 90°C under gentle and constant stirring for 5 minutes, obtaining a homogeneous solution. According to this particular exemplary embodiment, the solution was applied on the surface of freshly-collected strawberries (not limiting, as the alimentary protective coating may be applied on the surface of other fruits or other alimentary products), by means of submersion of the strawberries in the solution for 1 min. The thus treated strawberries were allowed to air-dry for 2h at 25°C. The covered strawberries showed, relative to non-covered ones, a 40% reduction of mass loss after 20 days in the refrigerator at 6°, keeping their colour and original appearance (Fig. 5).

*Example 4: Procedure for obtaining an alimentary packaging from the composition of the invention*

In an exemplary embodiment, an alimentary film described in Example 2 was used for the preparation of an alimentary packaging. Starting from 1 kg of flour obtained by the procedure described in example 1, 200 ml of glycerol were added for the preparation of the alimentary film. This mixture was homogenised at 25°C in a rotary mixer at 30 revolutions per minute for 20 minutes, before feeding the extruder comprised of a screw rotating at 60 revolutions per minute, having a 25 mm diameter, 1000 mm length, 4 heating areas with a temperature profile of 90, 120, 120 and 130°C and a head with an annular section nozzle having a 35 mm diameter and a thickness of 2 mm, with an inner air-blowing system for forming the tubular film, as well as an outer ring of air for cooling said film. The tubular film produced, with a diameter comprised between 150 and 300 mm, was collected in line by two 150 mm diameter nip rollers that rotate at a velocity that is selected for adjusting the thickness of the formed film, a thickness comprised between 0.15 and 0.55 mm, which is collected by means of an drawing system with a pneumatic drive. A $15 \times 15$ cm$^2$ square sample was cut out from the obtained alimentary film, which was fixed to a frame along its periphery and heated by means of a resistor located at 5 cm from its surface for 1 min. Next, the film sample was pressed against a metal mould with the shape and dimensions of the desired packaging, by shifting of the frame to a position wherein the film presses against the mould.

After 1 min the frame is driven in the opposite direction to separate the film from the mould and, once the film is released from the frame, the excess material is cut away from the edge of the obtained packaging (Fig. 6). The obtained packaging provides for its sealing at a later stage based on the needs of the product that is to be contained.

The examples and illustrations included in the present invention show, in an illustrative, non-limiting manner, the specific embodiments in which the present invention may be implemented. Combinations of the previously described exemplary embodiments, and other not specifically described exemplary embodiments, will be apparent to one skilled in the art after reviewing the preceding description.

The scope of the present invention is defined by the attached claims.

**Claims**

1. A gluten-free alimentary composition which comprises extruded babassu flour.

2. The alimentary composition according to claim 1, wherein the extruded babassu flour comprises babassu mesocarp flour and babassu seed oil.

3. The alimentary composition according to any of claims 1-2, wherein the extruded babassu flour comprises babassu mesocarp flour in a percentage comprised between 80-99% by weight, and babassu seed oil in a ratio comprised between 20-1% by weight.

4. The alimentary composition according to any of claims 1-3, comprising a plasticiser.

5. The alimentary composition according to claim 4, wherein the plasticiser is selected from glycerol and sorbitol.

6. An alimentary ingredient which comprises an alimentary composition according to any of claims 1-5.

7. An alimentary film which comprises a composition according to any of claims 1-5.

8. An alimentary protective coating which comprises a composition according to any of claims 1-5.

9. An alimentary packaging which comprises a film according to claim 7.

10. A procedure for preparing an alimentary composition according to any of claims 1-3, comprising the following steps:

   a) mixing babassu flour from the mesocarp in a percentage comprised between 80-99% by weight and babassu seed oil in a percentage comprised between 20-1% by weight;
   b) extruding the mixture of step a).

11. The procedure according to claim 10, wherein the extrusion of step b) is carried out with a temperature profile of 80-95°C, 100-120°C, 100-120°C, 100-120°C and at 20-30 rpm.

12. A procedure for obtaining an alimentary film according to claim 7, comprising the procedure for preparing an alimentary composition according to claims 10-11 and the following additional steps:

   i) adding a plasticiser to the alimentary composition;
   ii) extruding the mixture obtained in step i) at 25-35 rpm and with a temperature profile of 85-95°C, 115-125°C, 115-125°C and 125-135°C;
   iii) forming a tubular film by means of blowing and a roller system.

13. A procedure for obtaining an alimentary protective coating according to claim 8, comprising the following steps:

   - mixing an alimentary composition according to any of claims 1-5 with a solvent at a concentration of 0.5-30%;
   - heating the mixture to 25-95°C until complete dissolution;
   - applying the solution to alimentary products, covering them with the solution for a certain duration;
   - drying the alimentary products by means of air convection.

14. A procedure for obtaining an alimentary packaging which comprises the alimentary film according to claim 7, obtained according to the procedure of claim 10, and the following steps:

- heating the alimentary film until reaching a softening state;
- forming the film in a softening state pressing it against a mould;
- allowing the obtained packaging to cool down.

Fig. 1

Fig. 2A

Fig. 2B

Fig.3

Fig.4A

Fig.4B

Fig. 5

Fig. 6

## INFORME DE BÚSQUEDA INTERNACIONAL

Solicitud internacional N°

PCT/ES2019/070863

### A. CLASIFICACIÓN DEL OBJETO DE LA SOLICITUD
INV. A23L25/00

De acuerdo con la Clasificación Internacional de Patentes (CIP) o según la clasificación nacional y CIP.

### B. SECTORES COMPRENDIDOS POR LA BÚSQUEDA

Documentación mínima buscada (sistema de clasificación seguido de los símbolos de clasificación)
A23L

Otra documentación consultada, además de la documentación mínima, en la medida en que tales documentos formen parte de los sectores comprendidos por la búsqueda

Bases de datos electrónicas consultadas durante la búsqueda internacional (nombre de la base de datos y, si es posible, términos de búsqueda utilizados)   EPO-Internal, CHEM ABS Data, WPI Data, FSTA, BIOSIS

### C. DOCUMENTOS CONSIDERADOS RELEVANTES

| Categoría* | Documentos citados, con indicación, si procede, de las partes relevantes | Relevante para las reivindicaciones N° |
|---|---|---|
| X | VINICIUS BEBER ET AL: "Effect of Babassu Natural Filler on PBAT/PHB Biodegradable Blends: An Investigation of Thermal, Mechanical, and Morphological Behavior", MATERIALS, vol. 11, no. 5, 16 Mayo 2018 (2018-05-16), página 820, XP55683315, DOI: 10.3390/ma11050820 página 3 ----- -/-- | 1,4,6 |

☒ En la continuación del Recuadro C se relacionan otros documentos      ☒ Los documentos de familias de patentes se indican en el Anexo

| * | Categorías especiales de documentos citados: |
|---|---|
| "A" | documento que define el estado general de la técnica no considerado como particularmente relevante. |
| "E" | solicitud de patente o patente anterior pero publicada en la fecha de presentación internacional o en fecha posterior. |
| "L" | documento que puede plantear dudas sobre una reivindicación de prioridad o que se cita para determinar la fecha de publicación de otra cita o por una razón especial (como la indicada). |
| "O" | documento que se refiere a una divulgación oral, a una utilización, a una exposición o a cualquier otro medio. |
| "P" | documento publicado antes de la fecha de presentación internacional pero con posterioridad a la fecha de prioridad reivindicada. |

| | |
|---|---|
| "T" | documento ulterior publicado con posterioridad a la fecha de presentación internacional o de prioridad que no pertenece al estado de la técnica pertinente pero que se cita por permitir la comprensión del principio o teoría que constituye la base de la invención. |
| "X" | documento particularmente relevante; la invención reivindicada no puede considerarse nueva o que implique una actividad inventiva por referencia al documento aisladamente considerado. |
| "Y" | documento particularmente relevante; la invención reivindicada no puede considerarse que implique una actividad inventiva cuando el documento se asocia a otro u otros documentos de la misma naturaleza, cuya combinación resulta evidente para un experto en la materia. |
| "&" | documento que forma parte de la misma familia de patentes. |

| Fecha en que se ha concluido efectivamente la búsqueda internacional. | Fecha de expedición del informe de búsqueda internacional |
|---|---|
| 7 April 2020 | 20/04/2020 |

| Nombre y dirección postal de la Administración encargada de la búsqueda internacional    European Patent Office, P.B. 5818 Patentlaan 2 NL - 2280 HV Rijswijk Tel. (+31-70) 340-2040, Fax: (+31-70) 340-3016 N° de fax | Funcionario autorizado Rooney, Kevin N° de teléfono |
|---|---|

Formulario PCT/ISA/210 (segunda hoja) (Enero 2015)

## INFORME DE BÚSQUEDA INTERNACIONAL

| Solicitud internacional N° |
| --- |
| PCT/ES2019/070863 |

C (continuación).                    DOCUMENTOS CONSIDERADOS RELEVANTES

| Categoría* | Documentos citados, con indicación, si procede, de las partes relevantes | Relevante para las reivindicaciones N° |
| --- | --- | --- |
| A | MANIGLIA BIANCA C ET AL: "Bioactive films based on babassu mesocarp flour and stdrch ** FOOD HYDROCOLLOIDS, ELSEVIER BV, NL, vol. 70, 19 Abril 2017 (2017-04-19), páginas 383-391, XP085007983, ISSN: 0268-005X, DOI: 10.1016/J.F00DHYD.2017.04.022 citado en la applicación todo el documento | 1-14 |
| | ----- | |
| A | MANIGLIA BIANCA CHI EREGATO ET AL: "Isolation and characterization of starch from babassu mesocarp", FOOD HYDROCOLLOIDS, ELSEVIER BV, NL, vol . 55, 6 Noviembre 2015 (2015-11-06), páginas 47-55, XP029367554, ISSN: 0268-005X, DOI: 10.1016/J.FOODHYD.2015.11.001 todo el documento | 1-14 |
| A | ----- | 1-14 |
| | EP 3 375 297 A1 (DUM0ULIN [BE]; DUM0ULIN [BE]; AVEVE [BE]) 19 Septiembre 2018 (2018-09-19) reivindicacion 1 | |
| A | ----- | 1-14 |
| | GB 647 894 A (JESSE CLAYTON FORKNER; FORKNER JOHN H) 28 Diciembre 1950 (1950-12-28) página 1, columna 1, lineas 10-22 | |
| | ----- -/-- | |

Formulario PCT/ISA/210 (continuación de la segunda hoja) (Enero 2015)

**INFORME DE BÚSQUEDA INTERNACIONAL**

Información relativa a miembros de familias de patentes

Solicitud internacional Nº

PCT/ES2019/070863

```
EP 3375297      A1    19-09-2018      NINGUNO
----------------------------------------------------------------
GB 647894       A     28-12-1950      NINGUNO
----------------------------------------------------------------
```

Formulario PCT/ISA/210 (anexo_familia de patentes) (Enero 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MANIGLIA, B.C.** *Bioactive films based on babassu mesocarp flour and starch*